# EUROPÄISCHE PATENTSCHRIFT

(11) **EP 1 747 939 B1**
(45) Veröffentlichungstag und Bekanntmachung des Hinweises auf die Patenterteilung: **02.01.2008**
(21) Anmeldenummer: 06008362.3
(22) Anmeldetag: 22.04.2006
(51) Int. Cl.: B60R 3/02

(54) **Rampe für einen Türeinstieg eines Personenbeförderungsfahrzeugs**
Access ramp for a mass transit vehicle.
Rampe d'accès pour un véhicule de transport en commun

(30) Priorität: 29.07.2005 DE 202005011929 U; 10.08.2005 DE 202005012584 U
(43) Veröffentlichungstag der Anmeldung: 31.01.2007
(73) Patentinhaber: Hübner Transportation GbmH, 34123 Kassel (DE)
(72) Erfinder: Paul, Oliver, 34266 Niestetal (DE)
(74) Vertreter: Walther, Robert

(56) Entgegenhaltungen:
- WO-A-94/05878
- WO-A-98/06370
- DE-C2- 19 818 821
- DE-U1-7202004 013 58
- US-A- 5 775 232

## Beschreibung

Die vorliegende Erfindung betrifft eine Rampe für einen Türeinstieg eines Personenbeförderungsfahrzeugs mit einer im Bereich des Türeinstiegs angeordneten Rampenplattform, die aus einer Ruhestellung in eine Gebrauchsstellung motorisch ausfahrbar ist.

Rampen der unterschiedlichsten Art sind bekannt. Diese Rampen, seien es Handrampen oder motorisch betriebene Rampen, dienen schlussendlich dazu, Rollstuhlfahrern den Zugang zu Fahrzeugen des öffentlichen Personenverkehrs, und hier insbesondere des öffentlichen Personennahverkehrs, zu erleichtern.

So ist beispielsweise aus der DE 100 43 561 eine motorisch betriebene Rampe bekannt, bei der zur Verschieblichkeit des Wagens zu beiden Seiten der Rampenplattform sogenannte Rampenwagen vorgesehen sind, die durch Spindeln verschoben werden. Die Spindeln selbst werden hierbei motorisch angetrieben.

Derartige Rampen sind unmittelbar unter dem Fahrzeugboden beispielsweise eines Busses angeordnet. Insbesondere der Antrieb und die mit dem Antrieb in Verbindung stehenden Antriebselemente, wie Motor und Spindel, sind hierbei gesondert am Fahrzeugboden bzw. an der Karosserie des Fahrzeugs befestigt. Zum Schutz der mechanischen Bestandteile der Rampe ist allerdings auch bekannt, die Antriebseinrichtung der Rampe von unten abzudecken, um eine Verschmutzung zu verhindern.

Gerade bei Bussen besteht in jüngster Zeit das Problem, dass auf Grund einer Vielzahl zusätzlicher Aggregate das Busgewicht erheblich zugenommen hat. Da die Achslast für eine Achse begrenzt ist, sind viele Bushersteller dazu übergegangen, die Achslast auf mehrere Achsen, insbesondere zwei Hinterachsen, zu verteilen. Solche mehrachsigen Busse sind teuer, so dass man bemüht ist, das Gewicht des Busses möglichst niedrig zu halten. Insbesondere bei Straßenbahnen aber auch bei Trolleybussen, also solchen Bussen, die elektrisch angetrieben sind, besteht darüber hinaus das Problem, dass sämtliche Aggregate oder Bauteile nicht so ausgebildet oder auch so eingebaut sind, dass sie nicht elektrisch leitend sind, so dass sich hier der Einsatz von Rampen aus Aluminium oder Stahl verbietet. Ganz abgesehen davon, weisen diese Werkstoffe per se ein nicht unerhebliches Gewicht auf.

Der Erfindung liegt daher die Aufgabe zu Grunde, eine Rampe für Fahrzeuge des Personenverkehrs, und hier insbesondere für Busse, zu schaffen, die einerseits ein niedriges Eigengewicht aufweisen, und andererseits nicht elektrisch leitend ausgebildet sind.

Die Aufgabe wird erfindungsgemäß dadurch gelöst, dass sowohl die Rampenplattform als auch der Antrieb von einer wannenförmigen Einrichtung aus Kunststoff aufgenommen werden. Durch die wannenförmige Einrichtung aus Kunststoff werden zweierlei Vorteile verwirklicht. Zum einen wird hierdurch eine erhebliche Gewichtsersparnis gegenüber einer Wanne aus Stahl erreicht, und zum anderen ist eine derartige Wanne nicht elektrisch leitend. Insbesondere wenn die Rampenplattform selbst auch aus Kunststoff hergestellt ist, ist bei einem Einsatz derartiger Rampen selbst in Straßenbahnzügen oder Trolleybussen keine Einschränkung erforderlich.

Weitere vorteilhafte Merkmale sind den Unteransprüchen zu entnehmen.

So ist insbesondere vorgesehen, dass der Antrieb mindestens eine, vorzugsweise zwei parallel zueinander angeordnete Spindeln umfasst, die motorisch antreibbar sind. Der motorische Antrieb für die Spindeln umfasst einen Motor, der mit der mindestens einen Spindel durch ein Kraftübertragungsglied, z. B. einem Riementrieb, in Verbindung steht. Der Antrieb der Rampenplattform durch die mindestens eine Spindel erfolgt über eine auf der Spindel angeordnete Spindelmutter, die mit der Rampenplattform in Verbindung steht.

Nach einem weiteren Merkmal der Erfindung ist die Rampenplattform im ausgefahrenen Zustand abklappbar von dem Antrieb gehalten. Dies wird im einfachsten Fall dadurch erreicht, dass die Rampenplattform mit dem Antrieb durch eine Gummilippe in Verbindung steht, die die vertikale Verschwenkbarkeit der Rampenplattform gewährleistet.

Wie bereits an anderer Stelle erläutert, ist die wannenförmige Einrichtung aus Kunststoff ausgebildet, wobei eine besonders stabile Wanne sich bei Verwendung von faserverstärktem Kunststoff ausbilden lässt. Gleiches gilt für die Rampenplattform. Auch die Rampenplattform ist vorzugsweise aus Kunststoff, insbesondere aus faserverstärktem Kunststoff, hergestellt.

Anhand der Zeichnungen wird die Erfindung beispielhaft näher erläutert.
- Figur 1: zeigt die wannenförmige Einrichtung mit der daran angeordneten Rampenplattform in perspektivischer Darstellung;

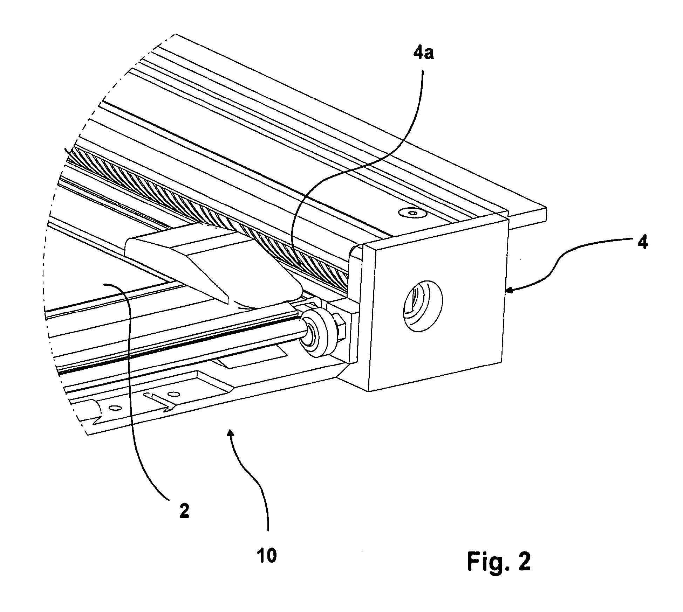

- Figur 2: zeigt die Einzelheit A in vergrößerter Darstellung;
- Figur 3: zeigt die Einzelheit B in vergrößerter Darstellung;
- Figur 4: zeigt eine Ansicht auf eine Rampe, wobei die Rampenplattform von oben durch den Boden des Busses oder der Straßenbahn abgedeckt ist;
- Figur 5: zeigt einen Schnitt gemäß der Linie V - V aus Figur 4;
- Figur 6: zeigt eine Seitenansicht einer Rampe mit ausgefahrener Rampenplattform;
- Figur 7: zeigt einen Schnitt gemäß der Linie VII - VII aus Figur 4;
- Figur 8: zeigt die Rampe mit ihren wesentlichen Bestandteilen in einer Explosionsdarstellung.

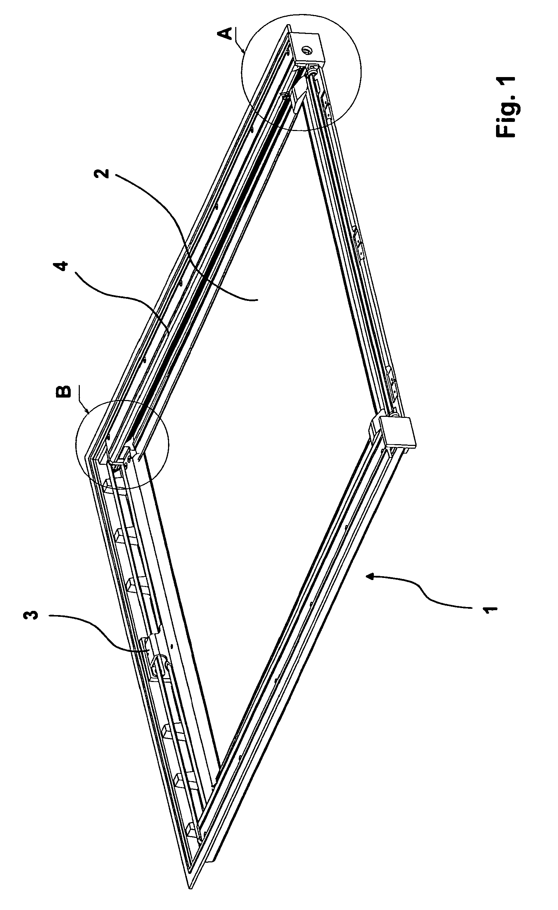

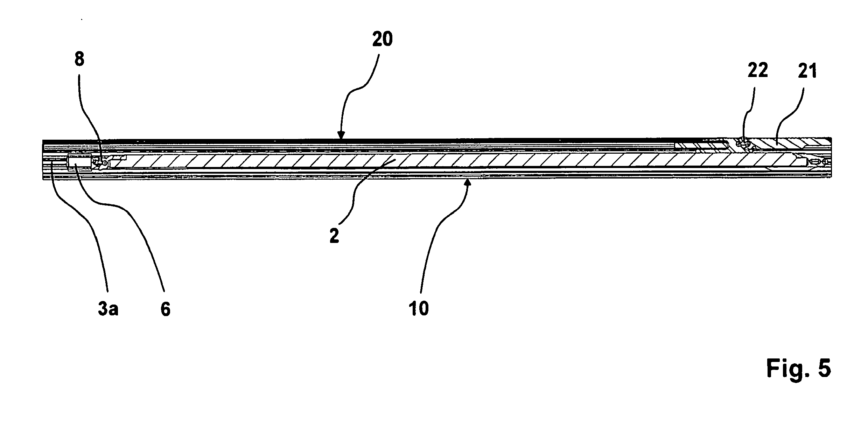

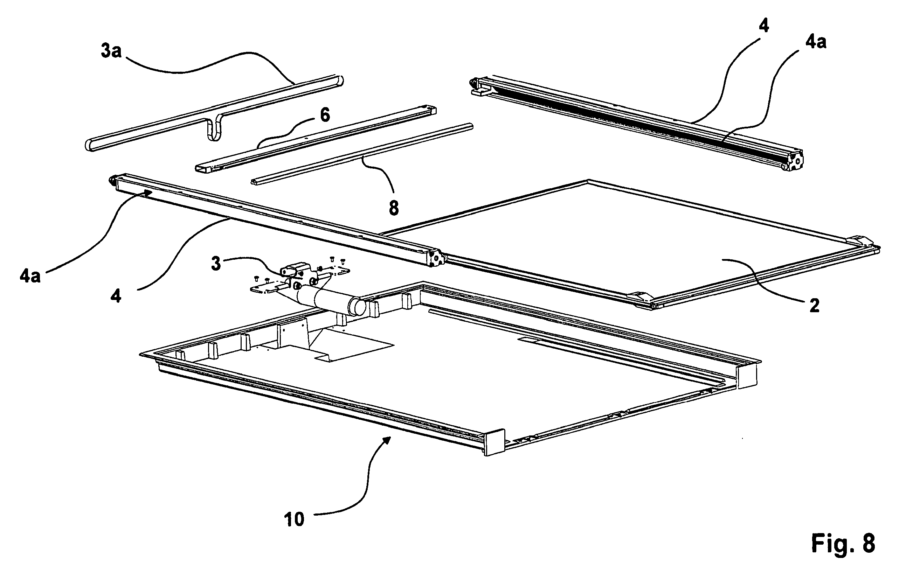

Bei der Darstellung gemäß Figur 1 ist die wannenförmige Einrichtung zur Aufnahme der Rampenplattform 2 mit dem Antrieb 4 mit 1 bezeichnet. Die wannenförmige Einrichtung zeichnet sich im Einzelnen durch eine Kunststoffwanne 10 (Figur 8) aus, die der Aufnahme sämtlicher Einrichtungen, also sowohl des Antriebs als auch der Rampenplattform selbst, dient. Darüber hinaus wird die Oberseite der Wanne 10 durch den Boden des Busses oder der Straßenbahn abgedeckt (Figur 5). Die Wanne 10 besteht aus einem faserverstärkten Kunststoff und ist vorzugsweise im Spritzgießverfahren als GFK-Handlaminat im GFK-Nasspressverfahren oder mittels GFK-Vakuum-Harz-Injektion herstellbar.

Der Antrieb 3, 4 gemäß Figur 1 und Figur 8 umfasst im Einzelnen den Antriebsmotor 3 mit dem Riementrieb 3a, der in Verbindung mit den in den Führungselementen 4 angeordneten Spindeln 4a steht.

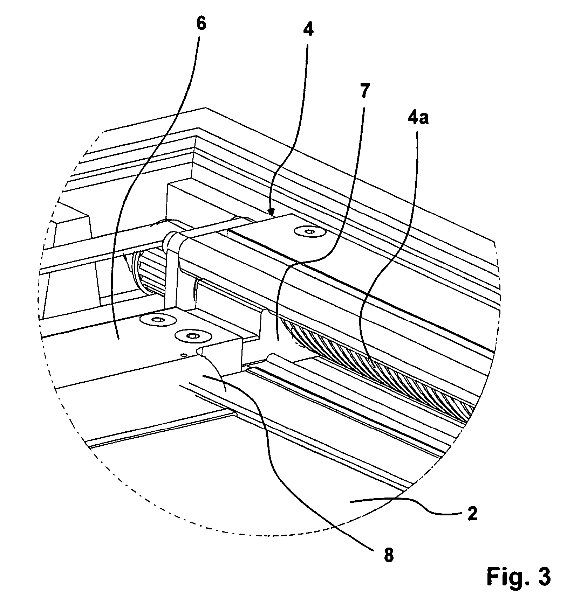

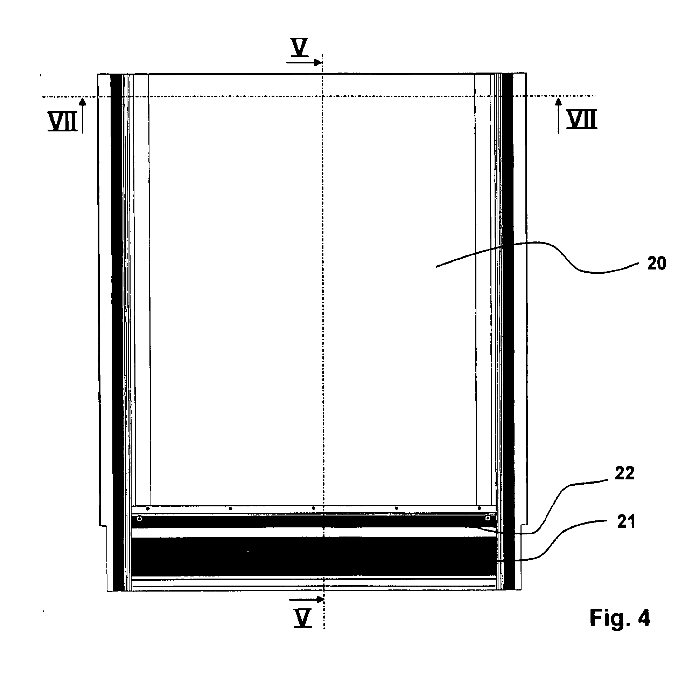

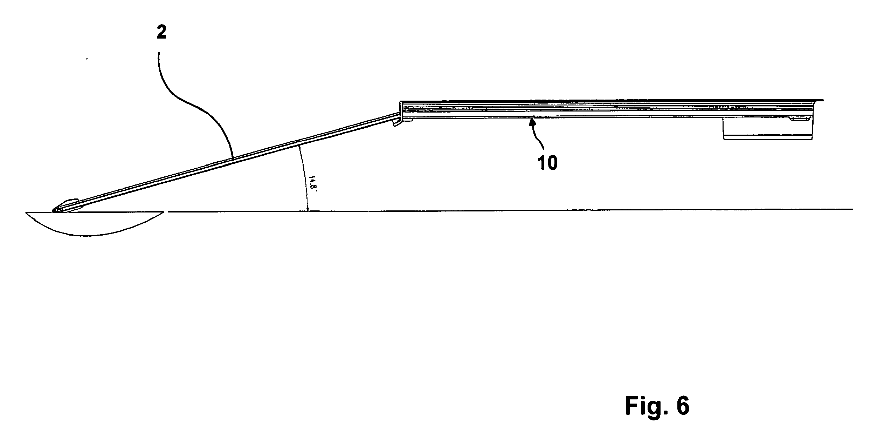

Die mit 2 bezeichnete Rampenplattform weist endseitig die Traverse 6 auf, wobei zu beiden Seiten die Traverse 6 durch Spindelmuttern 7 in Verbindung mit der Spindel 4a steht (Figur 3). Die Traverse 6 ist mit der Rampenplattform 2 durch eine Gummileiste 8 verbunden, die ermöglicht, dass im ausgefahrenen Zustand der Rampenplattform 2 die Rampenplattform nach unten abklappen kann, wie sich dies beispielsweise aus Figur 6 ergibt. Die Wanne 10 wird abgedeckt durch den Boden des Fahrzeugs, also beispielsweise des Busses oder der Straßenbahn, wie dies beispielsweise in Figur 4 aber auch in Figur 5 dargestellt ist. Der Boden des Fahrzeugs ist hierbei mit 20 bezeichnet, wobei der Boden des Fahrzeugs im Bereich des vorderen Endes eine Klappe 21 besitzt, wobei die Klappe 21 über ein Gummischarnier 22 mit dem Boden verbunden ist. Dies vor folgendem Hintergrund:

Die Rampenplattform 2 weist im ausgefahrenen und abgeklappten Zustand gemäß Figur 6 einen Abstand zu der Höhe der Oberseite des Bodens 20 auf. Um diesen Abstand zu überbrücken dient die Klappe 21, die bei abgeklappter Rampe gemäß Figur 6 auf die Rampe zu klappt.

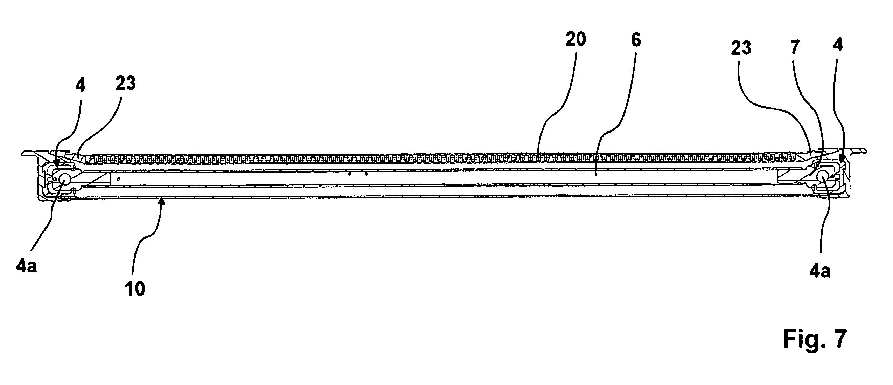

Die Ausbildung und Auflage des Bodens des Busses auf der Wanne 10 ergibt sich insbesondere aus Figur 7. Hier ist erkennbar, dass der Boden 20 seitlich angeordnete Leisten 23 aufweist, mit denen der Boden 20 auf einer entsprechend ausgebildeten Schräge auf der Wanne 10 aufliegt. Der Boden 20 ist hierbei sandwichförmig ausgebildet, um die entsprechenden Lasten aufnehmen zu können, z. B. in Form einer Aluminium-Wellaluminium-Aluminium-Platte oder auch als CFK-Sandwich-Platte.

Die Funktionsweise der Rampe stellt sich insgesamt wie folgt dar: Durch den motorischen Antrieb 3 wird der Riementrieb 3a betätigt. Der Riementrieb 3a steht mit der zu beiden Seiten der Wanne angeordneten Spindel 4a in Verbindung, die in den Führungselementen 4 geführt ist. Durch die Anordnung von Spindelmuttern 7 zu beiden Seiten der Traverse 6 wird die Rampenplattform 2, die an der Traverse 6 durch eine Gummileiste 8 befestigt ist, ausgeschoben oder eingezogen. Im abgeklappten Zustand der Rampe (Figur 6) liegt die Klappe 21, die durch das Gummiprofil 22 mit dem Boden 20 verbunden ist, mit ihrem stirnseitigen Ende auf der Rampenplattform 2 auf und überbrückt insofern den Höhenunterschied zwischen der Oberseite des Bodens 20 einerseits und der Oberseite der Rampenplattform 2 andererseits.

## Patentansprüche

1. Rampe (1) für einen Türeinstieg eines Personenbeförderungsfahrzeugs mit einer im Bereich des Türeinstiegs angeordneten Rampenplattform, die aus einer Ruhestellung in eine Gebrauchsstellung motorisch ausfahrbar ist,
**dadurch gekennzeichnet,**
**dass** sowohl die Rampenplattform (2) als auch der Antrieb (3, 3a, 4, 4a, 6, 8) von der wannenförmigen Einrichtung (1) aus Kunststoff aufgenommen wird.

2. Rampe nach Anspruch 1,
**dadurch gekennzeichnet,**
**dass** der Antrieb (3, 3a, 4, 4a, 6, 8) mindestens eine, vorzugsweise zwei parallel zueinander angeordnete Spindeln (4a) umfasst, die motorisch antreibbar sind.

3. Rampe nach Anspruch 2,
**dadurch gekennzeichnet,**
**dass** zum Antrieb der mindestens einen Spindel (4a) ein Motor (3) vorgesehen ist, der mit der mindestens einen Spindel (4a) durch ein Kraftübertragungsglied (3a), z. B. einem Riementrieb, in Verbindung steht.

4. Rampe nach einem der voranstehenden Ansprüche ,
**dadurch gekennzeichnet,**
**dass** die Rampenplattform (2) durch eine auf der Spindel (4a) angeordnete Spindelmutter (7) mit dem Antrieb verbunden ist.

5. Rampe nach einem der voranstehenden Ansprüche,
**dadurch gekennzeichnet,**
**dass** die Rampenplattform (2) im ausgefahrenen Zustand abklappbar von dem Antrieb gehalten ist.

6. Rampe nach einem der voranstehenden Ansprüche ,
**dadurch gekennzeichnet,**
**dass** die wannenförmige Einrichtung (10) aus faserverstärktem Kunststoff ausgebildet ist.

7. Rampe nach einem der voranstehenden Ansprüche ,
**dadurch gekennzeichnet,**
**dass** die Rampenplattform (2) aus Kunststoff, insbesondere aus faserverstärktem Kunststoff hergestellt ist.

## Claims

1. A ramp (1) to allow door access to a mass transit vehicle with a ramp platform that is disposed in the region of the door access and is motor driven to deploy from a position of rest into a position of utilization,
**characterized in**
**that** both the ramp platform. (2) and the drive (3, 3a, 4, 4a, 6, 8) are accommodated in the tub-shaped plastic device (1).

2. The ramp as set forth in claim 1,
**characterized in**
**that** the drive (3, 3a, 4, 4a, 6, 8) comprises at least one, preferably two spindles (4a) disposed parallel to each other, said spindles being motor-driven.

3. The ramp as set forth in claim 2,
**characterized in**
**that** a motor (3) is provided for driving the at least one spindle (4a), said motor being connected to the at least one spindle (4a) by a force transmitting member (3a), e.g. a belt drive.

4. The ramp as set forth in any one of the afore mentioned claims,
**characterized in**
**that** the ramp platform (2) is connected to the drive by a spindle nut (7) disposed on the spindle (4a).

5. The ramp as set forth in any one of the afore mentioned claims,
**characterized in**
**that** the ramp platform (2) is retained so as to be folded away by the drive in the deployed state.

6. The ramp as set forth in any one of the afore mentioned claims,
**characterized in**
**that** the tub-shaped device (10) is made from fiber-reinforced plastic material.

7. The ramp as set forth in any one of the afore mentioned claims,
**characterized in**
**that** the ramp platform (2) is made from plastic material, more specifically from fiber-reinforced plastic material.

## Revendications

1. Rampe (1) d'accès à une porte d'un véhicule de transport en commun avec une plate-forme de rampe disposée à la hauteur de la porte d'entrée et déployable par moteur d'une position de repos dans une position d'utilisation,
**caractérisée en ce**
**que** la plate-forme (2) de la rampe et l'entraînement (3, 3a, 4, 4a, 6, 8) sont tous deux logés dans le dispositif (1) en forme de cuve réalisé en matière plastique.

2. Rampe selon la revendication 1,
**caractérisée en ce**
**que** l'entraînement (3, 3a, 4, 4a, 6, 8) comprend au moins un, de préférence deux arbres (4a) parallèles aptes à être entraînés par moteur.

3. Rampe selon la revendication 2,
**caractérisée en ce**
**que** pour l'entraînement de l'au moins un arbre (4a) il est prévu un moteur (3) qui est relié à l'au moins un arbre (4a) par un organe de transmission de force (3a), p. ex. par une courroie d'entraînement.

4. Rampe selon l'une quelconque des revendications précédentes
**caractérisée en ce**
**que** la plate-forme (2) de la rampe est reliée à l'entraînement par un écrou d'arbre (7) disposé sur l'arbre (4a).

5. Rampe selon l'une quelconque des revendications précédentes,
**caractérisée en ce**
**que** la plate-forme (2) de la rampe est retenue par l'entraînement de manière à être rabattable à l'état déployé.

6. Rampe selon l'une quelconque des revendications précédentes,
**caractérisée en ce**
**que** le dispositif en forme de cuve (10) est réalisé en matière plastique à renfort de fibres.

7. Rampe selon l'une quelconque des revendications précédentes,
**caractérisée en ce**
**que** la plate-forme (2) de la rampe est réalisée en matière plastique, notamment en matière plastique à renfort de fibres.
